# EUROPEAN PATENT SPECIFICATION

(11) **EP 2 854 555 B1**
(45) Date of publication and mention of the grant of the patent: **22.01.2020**
(21) Application number: 13745725.5
(22) Date of filing: 31.05.2013
(51) Int. Cl.: A22B 5/00

(54) **METHOD AND APPARATUS FOR THE SEUROP CLASSIFICATION OF THE CONFORMATION OF CARCASSES OF SLAUGHTERED CATTLE**
VERFAHREN UND VORRICHTUNG ZUR SEUROP-KLASSIFIKATION DER KONFORMATION VON KADAVERN VON GESCHLACHTETEM VIEH
PROCÉDÉ ET APPAREIL POUR LA CLASSIFICATION SEUROP DE LA CONFORMATION DE CARCASSES DE BÉTAIL ABATTU

(30) Priority: 05.06.2012 IT RM20120256
(43) Date of publication of application: 08.04.2015
(73) Proprietor: West Systems S.r.l., Florence (IT)
(72) Inventor: NEGRETTI, Paolo, 00159 Roma (IT); BIANCONI, Giovanna, 01027 Montefiascone (Viterbo) (IT)
(74) Representative: Fezzardi, Antonio
(86) International application number: PCT/IT2013/000155
(87) International publication number: WO 2013/183073

(56) References cited:
- EP-A2- 0 029 562
- FR-A1- 2 608 899
- US-A1- 2008 310 684
- Paul Allen ET AL: "OBJECTIVE BEEF CARCASS CLASSIFICATION A REPORT OF A TRIAL OF THREE VIA CLASSIFICATION SYSTEMS", , 1 May 2000 (2000-05-01), XP055271605, Retrieved from the Internet: URL:https://www.teagasc.ie/media/website/p ublications/2000/144/beefgrading.pdf [retrieved on 2016-05-10]
- OLIVER A ET AL: "Predicting meat yields and commercial meat cuts from carcasses of young bulls of Spanish breeds by the SEUROP method and an image analysis system", MEAT SCIENCE, ELSEVIER SCIENCE, GB, vol. 84, no. 4, 1 April 2010 (2010-04-01), pages 628-633, XP026907423, ISSN: 0309-1740, DOI: 10.1016/J.MEATSCI.2009.10.022 [retrieved on 2009-10-28]
- GOYACHE F ET AL: "The usefulness of artificial intelligence techniques to assess subjective quality of products in the food industry", TRENDS IN FOOD SCIENCE AND TECHNOLOGY, ELSEVIER SCIENCE PUBLISHERS, GB, vol. 12, no. 10, 1 October 2001 (2001-10-01), pages 370-381, XP004369702, ISSN: 0924-2244, DOI: 10.1016/S0924-2244(02)00010-9

## Description

The present invention relates to the technical field of the assessment systems of carcasses, and it particularly relates to an apparatus and a method for the SEUROP classification of conformation of carcasses of slaughtered cattle.

As it is known, the two main parameters for assessing the quality of a carcass of a beef bovine are the conformation and the body fat condition. The SEUROP classification system is a qualitative assessment system of the carcasses of cattle, and it allows assigning a carcass, better, a half-carcass, also referred to as a side, of a slaughtered bovine and, one the basis of the conformation of such carcass, to one of the following six classes S,E,U,R,O,P. The class S, meaning "superior" represents the highest qualitative level, and it is found when the carcass has markedly convex profiles, with superior muscle development and a double rump. A carcass with a class S conformation has high yields on slaughtering, from both a qualitative and a quantitative viewpoint.

The next five classes E,U,R,O,P correspond to progressively decreasing qualitative levels:
E = "excellent", with convex to super convex profiles and an exceptional muscle development;
U = "very good" with profiles on the whole convex and a very good muscle development;
R = "good" with profiles on the whole straight and a good muscle development;
O = "fair" with profiles straight to concave and an average muscle development;
P = "poor", which represents the lowest qualitative level and which it is found when the carcass has profiles from concave to very concave and with a limited muscle development; a carcass with a class P conformation has low yields on slaughtering, from both a qualitative and a quantitative viewpoint.

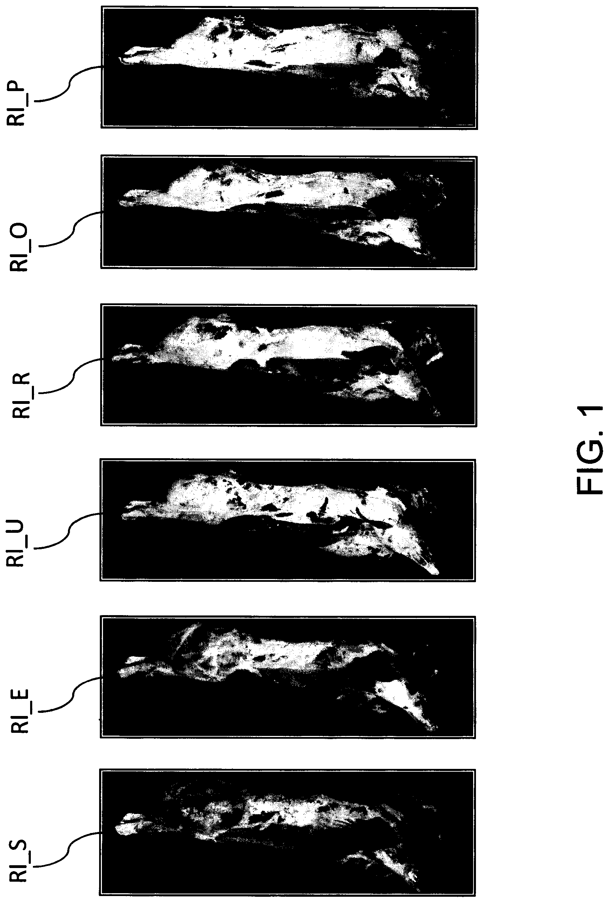

The SEUROP conformation classification system is based on an assessment grid based on a plurality of official reference images, each having for its subject a corresponding carcass model. The above-mentioned images are represented in Fig. 1 and indicated with the of reference symbols RI_S, RI_E, RI_U, RI_R, RI_O, RI_P, wherein the reference image RI_E corresponds to the class E, the reference image RI_U corresponds to the class U, and so on.

The images RI_S, RI_E, RI_U, RI_R, RI_O, RI_P act as a reference by means of which skilled assessors assign the carcasses to a corresponding class to which they belong. In the prior art, the assessment of the SEUROP class relating to the carcass conformation is carried out directly by the skilled assessors through an inspection and a visual examination of the carcass immediately after slaughtering the bovine and at the slaughtering site. In the practice, it is the task of the assessors to determine, on the basis of the their expertise, to which of the above-mentioned reference images RI_S, RI_E, RI_U, RI_R, RI_0, RI_P a carcass resembles more, in order to assign the carcass to the corresponding class. Therefore, it shall be apparent that the above-mentioned assessment is not objective, since it may depends on subjective factors ascribable to the same assessor, such as, for example, their expertise, accuracy, and attention.

Furthermore, due to the very fact that it requires the presence of a skilled assessor, the above-described assessment in accordance with the prior art has a cost problem, in addition to the fact that, in order to reduce the subjectivity error, which is always present in the judgments of a visual assessment, it would be necessary to have an assessment in parallel of at least three official assessors in order to get a more reliable datum through a statistical calculation.

It is known, from Paul Allen ET AL: "OBJECTIVE BEEF CARCASS CLASSIFICATION A REPORT OF A TRIAL OF THREE VIA CLASSIFICATION SYSTEMS" 01/05/2000, the use of methods for image analysis, it should be noted that in this document are neither disclosed nor suggested which parameters are used and detected. Furthermore, it is not disclosed if such parameters are angular parameters similar or corresponding to the angular parameters according to the present invention. Furthermore, it is also clear from Paul Allen ET AL, that, for the experiment therein disclosed settings and calibrations have been required to obtain the prediction equations.

It is also known, from Oliver A ET AL: "Predicting meat yields and commercial meat cuts from carcasses of young bills of Spanish breeds by the SEUROP method and an image analysis system", MEAT SCIENCE, ELSEVIER SCIENCE, GB, Vol. 84, n. 04 01/04/2010, pages 628-633, the results of tests wherein 33 measures of lengths, areas and perimeters are analysed. Differently from the present invention, angular parameters are neither disclosed nor cited Oliver A ET AL, while the use of angular parameters is an essential feature of the present invention. Furthermore, Oliver A ET AL discloses the need to take two photos for each carcass: a side and dorsal view, in order to get the results of comparison of the official classification. The needing to take linear perimeter and surface measures, involves that it is required a pre-calibration for all analysis systems of two-dimensional computer images.

Object of the present invention is to provide a classification apparatus and method that allow obtaining a qualitative assessment that is as objective and automatic or semiautomatic as possible and that has relatively limited costs.

Such an object is achieved by a classification apparatus as defined in the appended claim 1 and by a method according to claim 10.

Advantageous embodiments of the above-mentioned apparatus and method are defined in the appended dependent claims.

Further characteristics and advantages of the invention will be apparent from the following detailed description, given by way of non-limiting example only, with reference to the appended drawings, in which:
- Fig. 1 shows the six reference images of the SEUROP classification;
- Fig. 2 is a view of an exemplary block diagram of an apparatus for the SEUROP classification of the conformation of carcasses of slaughtered cattle, said apparatus being adapted to acquire a digital image of the carcass to be assessed;
- Fig. 3 represents a digital image of a side of a carcass to be assessed;
- Fig. 4 represents the digital image of Fig. 3, in which a first angular parameter calculable by the apparatus of Fig. 2 is graphically pointed out;
- Fig. 5 represents the digital image of Fig. 3, in which a second angular parameter calculable by the apparatus of Fig. 2 is graphically pointed out;
- Fig. 6 represents the digital image of Fig. 3, in which a third angular parameter calculable by the apparatus of Fig. 2 is graphically pointed out;
- Fig. 7 represents the digital image of Fig. 3, in which a fourth angular parameter calculable by the apparatus of Fig. 2 is graphically pointed out;
- Fig. 8 represents the digital image of Fig. 3, in which a fifth angular parameter calculable by the apparatus of Fig. 2 is graphically pointed out; and
- Fig. 9 is an exemplary flow diagram of a procedure for the classification SEUROP of the conformation of carcasses of slaughtered cattle.

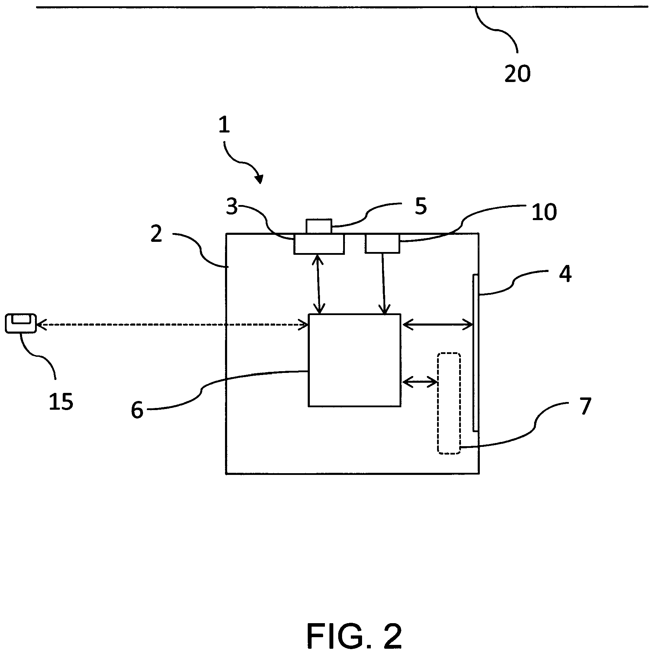

With reference to Fig. 2, with 1 is generally indicated an apparatus for the SEUROP classification of the conformation of carcasses of slaughtered cattle, also referred to as a classification apparatus 1. Preferably, the apparatus 1 is intended to be used in slaughterhouses for assigning the sides of the carcasses coming out from a slaughtering line to a SEUROP class, such sides being hung to a line 20 comprising a track adapted to translate the sides of the carcasses.

The classification apparatus 1 comprises an acquisition unit 3 adapted to acquire at least one digital image 30 of an outer face of a side 45 of a carcass of a slaughtered bovine. The digital image 30 can be acquired, for example, in a condition in which the side 45 is stopped on the line 20 so as to be located in a position in which it faces the acquisition unit 3. In accordance with an embodiment, the acquisition unit 3 comprises an outer interchangeable lens 5 removably associable to the acquisition unit 3. Preferably, the acquisition unit 3 comprises a video camera, for example, an industrial video camera with a high resolution CCD sensor (e.g., 5 Megapixel) provided with an Ethernet interface.

The apparatus 1 further comprises a processing unit 6, operatively connected to the acquisition unit 3, for example, through the above-mentioned Ethernet interface, and configured to receive and process the digital image 30 to assign the side, therefore the carcass, to one of the six classes of the SEUROP classification on the basis of at least one angular parameter of the side obtained by processing the digital image. Such angular parameter is calculated by the unit 6 processing the digital image 30.

In accordance with an embodiment, the above-mentioned processing unit 6 is an industrial PC comprising processing and storing resources.

Preferably, the classification apparatus 1 comprises a touchscreen display 4, operatively connected to the processing unit 6, to allow an operator controlling the processing unit 6. The display 4 can be further useful to display the digital image 30 to the operator. In accordance with an embodiment, the classification apparatus 1 comprises a container 2 adapted to house the processing unit 6 and the acquisition unit 3. The touchscreen display 4 is associated to a wall of the container 2, for example, it is flush with said wall. The container 2 is preferably sealed, and it allows preserving the functionality and the insulation on the internal electronic components of the apparatus 1. Furthermore, the presence of the touchscreen display 4, in combination with the sealed container 2, allows preserving the hygiene required to the slaughtering facilities.

In accordance with a further embodiment, the classification apparatus 1 comprises a service keyboard 7, for example, foldable, housed within the container 2 and accessible through a door associated to a wall of the sealed container 2.

The keyboard 7 is not intended to be employed during the normal use of the apparatus 1, but it is provided for extra operations, for example, configuration and/or programming and/or maintenance operations of the processing unit 6.

In accordance with an embodiment, the apparatus 1 is configured to be operatively connected, for example, in the wireless mode, to an external printer 15 of slaughtering labels, for example, a thermal printer, so that the printed labels can carry, in addition to the vital statistic data of the bovine, also the classes SEUROP to which the carcasses are attributed. In a currently less preferred embodiment, the printer 15 is a printer within the apparatus 1.

It is possible to provide that the apparatus 1 further comprises at least one photocell 10, to automatically detect the passage of a side on the line 20 and to automatically acquire the digital image 30.

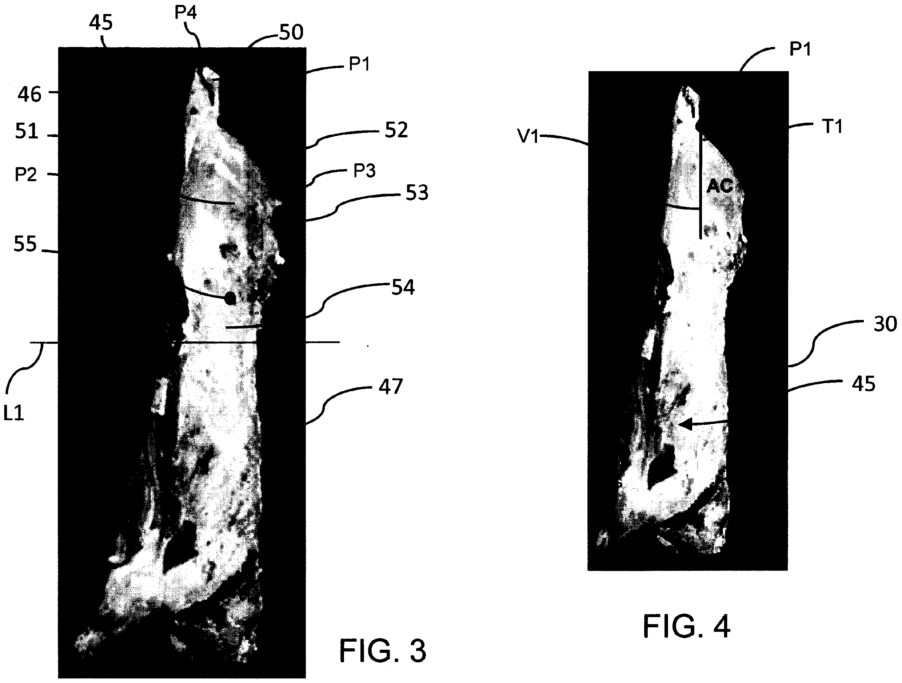

In Fig. 3, a digital image 30 of the side 45 of a bovine carcass is shown, of the type acquirable by the apparatus 1, on which some anatomic parts of the side have been indicated with reference symbols. The digital image shows a side 45 comprising a region of the rump and of the lower limb 46 and a remaining region 47 of the side. The remaining region 47 comprises the back, the thoracic and abdominal walls, the forelimb and the cervical region. In the digital image, the line L1 has been represented to indicatively display the partition line between the region of the rump and of the lower limb 46 and the remaining region 47.

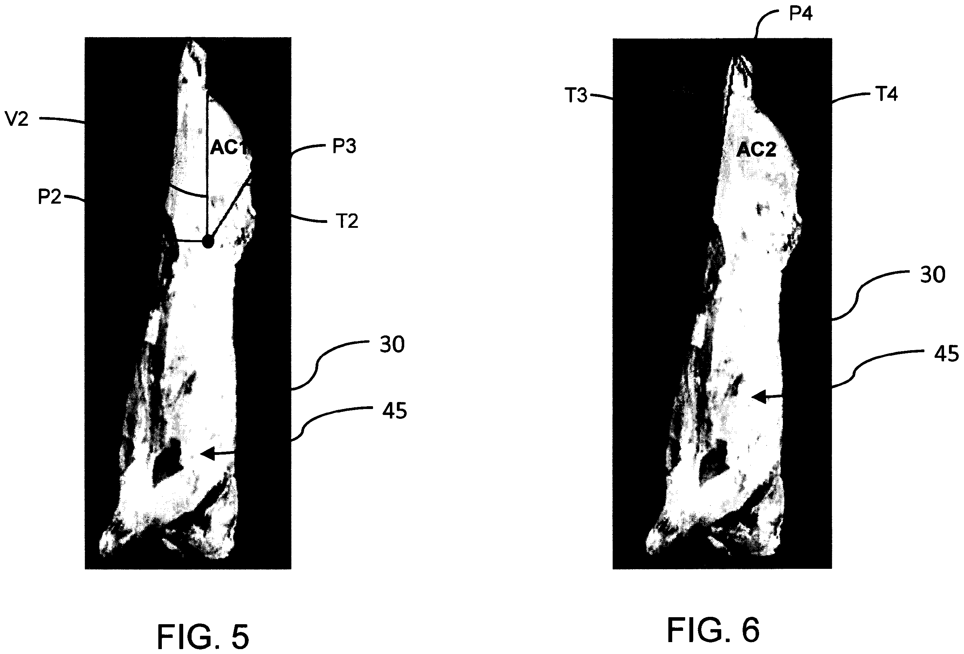

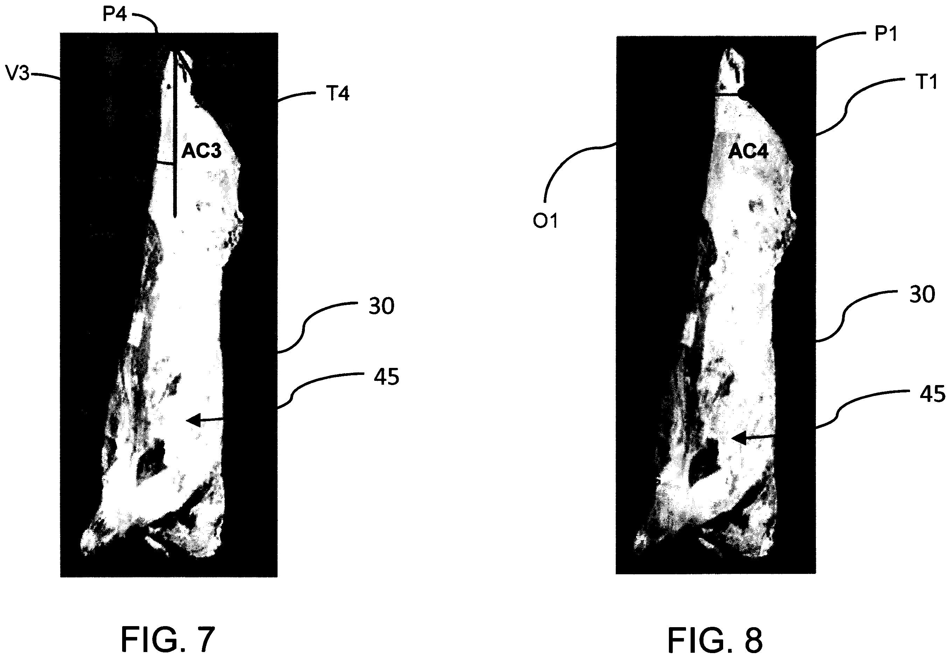

With reference to the Figs. 3 to 8, the processing unit 6 is configured and programed to receive the acquired digital image 30 and to calculate therefrom at least one angular parameter AC, AC1, AC2, AC3, AC4. The above-mentioned at least one angular parameter is calculated by using at least one landmark P1-P4 located in the region of the rump and of the lower limb 46. Preferably, such angular parameter is calculated by using one or more landmarks found exclusively in the region of the rump and of the lower limb 46.

The region of the rump and of the lower limb 46 comprises:
- a tibiotarsal articulation comprising a calcaneus and a tendo calcaneus 50;
- a thigh 51 having a caudal profile 52 with a first landmark P1, at the boundary between the caudal profile 52 and the tendo calcaneus 50 (the latter can be also anatomically referred to as the Achilles' tendon, and the first landmark P1 can be also anatomically referred to as the surfacing point of the tendon of the triceps surae muscle).

The region of the rump and of the lower limb 46 further comprises:
- a gluteus 53;
- a flank 54;
- a second landmark P2 corresponding to the lower part of the flank 54 located between the thigh 51 and the flank 54;
- a third landmark P3 corresponding to the ischial tuberosity;
- a ventral profile 55.

The acquisition unit 3 is such as to acquire the digital image 30 in a condition in which the side 45 hangs at a fourth landmark P4 of a free end portion of the calcaneus from an outer support member, for example, at the line 20, for example by a hook coupling.

In accordance with an embodiment, with reference to the Figs. 3 to 8, the processing unit 6 is configured and programmed to receive the acquired digital image 30 and to calculate therefrom at least one angular parameter selected from the following angular parameters AC, AC1, AC2, AC3, AC4, in which:
- AC represents the angle defined between a vertical straight line V1 and a straight line T1 tangent to the caudal profile 52 of the thigh 51 and passing through the first landmark P1;
- AC1 represents the angle comprised between a vertical straight line V2 and a straight line T2 passing through the second landmark P2 and the third landmark P3;
- AC2 represents the angle defined between a straight line T4 tangent to the caudal profile 52 of the thigh 51 passing through the fourth landmark P4 and a straight line T3 tangent to the ventral profile 55 passing through said fourth landmark P4;
- AC3 represents the angle defined between a vertical straight line V3 and said straight line T4 tangent to the caudal profile 52 of the thigh 51 passing through the fourth landmark P4;
- AC4 represents the angle defined between the straight line T1 tangent to the caudal profile 52 of the thigh 51 and passing through the first landmark P1 and a horizontal straight line O1.

The processing unit 6 is configured to assign the carcass to one of the six classes of the SEUROP classification on the basis of the value of said at least one calculated angular parameter, by a comparison between said at least one angular parameter calculated and reference thresholds.

In accordance with an embodiment, the above-mentioned reference thresholds are thresholds obtained from an analysis of the reference digital images R_S,...,RI_P.

In particular, said reference thresholds were obtained by a detection of the above-mentioned parameters on the reference images. Such detection gave the results indicated in the Table 1 set forth herein below:

**Tabella 1**

| **Angular parameters** | **Measurements from the images of the reference carcasses** | | | | | |
|---|---|---|---|---|---|---|
| **Parameters** | **S** | **E** | **U** | **R** | **O** | **P** |
| AC | 77.57 | 72.12 | 60.5 | 45.91 | 39.9 | 34.8 |
| AC1 | 44.77 | 39.87 | 35.3 | 30.9 | 30.1 | 28.43 |
| AC2 | 56 | 49.6 | 46.2 | 41.1 | 40.3 | 37.5 |
| AC3 | 43 | 40 | 35 | 32 | 31 | 28 |
| AC4 | 167 | 155 | 146 | 131 | 126 | 121 |

Starting from the values in Table 1, preferred thresholds were obtained, as indicated in the table 2 set forth herein below.

**Table 2**

| **Angular parameters** | **Conformation classes** | | | | | |
|---|---|---|---|---|---|---|
| | **S** | **E** | **U** | **R** | **O** | **P** |
| | **Superior** | **Excellent** | **Very good** | **Good** | **Fair** | **Poor** |
| **AC** | >78-73 | 72-61 | 60-47 | 46-41 | 40-36 | ≤35 |
| **AC1** | >45-41 | 40-36 | 35-32 | 31 | 30-29 | ≤28 |
| **AC2** | >56-51 | 50-47 | 46-42 | 41 | 40-38 | ≤37 |
| **AC3** | >44-41 | 40-36 | 35-33 | 32 | 31-29 | ≤28 |
| **AC4** | >167-156 | 155-147 | 146-132 | 131-127 | 126-122 | ≤121 |

In accordance with an embodiment, the processing unit 6 is configured to calculate two or more of the following angular parameters AC, AC1, AC2, AC3, AC4, and it is such as to obtain a combined angular parameter calculated as a linear combination of said calculated angular parameters. The attribution of one of the six classes of the SEUROP classification is carried out on the basis of the value of the combined angular parameter, by a comparison between the combined parameter and reference thresholds. The above-mentioned linear combination can be possibly a weighted combination.

In accordance with a particularly preferred embodiment, the combined angular parameter is calculated as AC+AC2+AC3+AC4 or as AC+AC1+AC2+AC3+AC4.

In accordance with an advantageous embodiment, the processing unit 6 is programmed to automatically determine by the analysis of the digital image 30 at least one of the above-mentioned four landmarks P1,P2,P3,P4.

In a further embodiment, the processing unit 6 is configured to allow a user to force at least one of the landmarks P1,P2,P3,P4. For example, the processing unit 6 is configured to display the acquired digital image 30 on the touchscreen display 4, and the apparatus 1 is such that said forcing can be carried out by the operator through the touchscreen display 4. For this reason, in this embodiment the classification may be defined as semiautomatic.

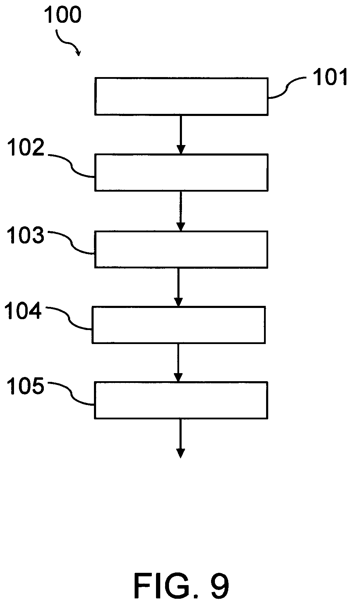

With reference to Fig. 9, it shall be noticed that the description given above for the apparatus 1 corresponds to the description of a method 100 for the SEUROP classification of the conformation of carcasses of slaughtered cattle comprising the steps of:
- acquiring 101 at least one digital image 30 of an outer face of a side 45 of a carcass of a slaughtered bovine, the side 45 comprising a region of the rump and of the lower limb 46 and a remaining region 47 of the side 45;
- calculating 103, starting from the acquired digital image, at least one angular parameter AC, AC1, AC2, AC3, AC4 by using at least one landmark P1-P4 located in the region of the rump and of the lower limb 46.

The method 100 further comprises a step 104 of assigning the carcass to one of the six classes of the SEUROP classification on the basis of the value of said at least one calculated angular parameter.

In accordance with an embodiment, the method 100 further comprises a step 102 to manually force said at least one landmark.

In accordance with a further embodiment the method 100 further comprises a step of printing 105 on a slaughtering label the class which the assessed carcass is attributed to.

Further characteristics of the above-mentioned method are directly inferred through the detailed description given above relative to the apparatus 1.

Experimental results showed that a classification apparatus of the type described above fully achieves the preset object described with reference to the state of the prior art.

In table 3, data obtained through the above-mentioned apparatus are set forth, in which said results are compared to results obtained through a visual inspection of fifty carcasses carried out by assessors.

**Table 3**

| **Carcass** | **SEUROP (visual)** | **SEUROP(automatic)** | | | | | | |
|---|---|---|---|---|---|---|---|---|
| | | **AC** | **AC1** | **AC2** | **AC3** | **AC4** | **AC+AC1+AC2+AC3+AC4** | **AC+AC2+AC3+AC4** |
| 1 | U | U | E | U | E | U | U | U |
| 2 | U | U | E | U | U | U | U | U |
| 3 | U | R | U | E | U | U | U | U |
| 4 | U | U | U | E | E | U | U | U |
| 5 | U | U | U | E | U | U | U | U |
| 6 | E | U | E | E | E | U | E | U |
| 7 | U | U | U | U | U | U | U | U |
| 8 | U | U | U | E | U | U | U | U |
| 9 | E | U | E | E | E | E | E | E |
| 10 | E | E | E | E | E | E | E | E |
| 11 | E | U | E | E | E | E | E | E |
| 12 | E | U | E | E | E | E | E | E |
| 13 | E | U | E | E | E | E | E | E |
| 14 | R | R | U | R | U | R | R | R |
| 15 | R | R | U | R | U | R | R | R |
| 16 | R | R | U | O | R | R | R | R |
| 17 | R | O | U | R | R | R | R | R |
| 18 | R | R | U | R | U | R | R | R |
| 19 | R | R | U | R | R | R | R | R |
| 20 | R | R | U | R | U | R | R | R |
| 21 | U | U | U | U | U | U | U | U |
| 22 | R | R | U | R | U | U | R | R |
| 23 | R | O | U | R | R | R | R | R |
| 24 | U | O | E | R | O | R | R | O |
| 25 | U | O | E | O | O | R | R | O |
| 26 | U | R | U | R | O | R | R | R |
| 27 | U | R | U | U | O | R | R | R |
| 28 | R | R | U | R | R | R | R | R |
| 29 | R | R | U | R | R | R | R | R |
| 30 | R | R | U | P | P | O | O | O |
| 31 | R | R | R | R | R | R | R | R |
| 32 | U | R | U | R | O | R | R | R |
| 33 | R | R | U | R | O | R | R | R |
| 34 | U | U | U | U | U | U | U | U |
| 35 | U | U | U | U | U | U | U | U |
| 36 | U | U | U | U | U | R | U | U |
| 37 | U | R | U | R | U | U | U | R |
| 38 | U | R | U | E | E | U | U | U |
| 39 | R | R | U | U | U | U | U | U |
| 40 | U | R | U | U | U | U | U | U |
| 41 | R | R | U | U | U | R | U | U |
| 42 | U | U | E | U | U | U | U | U |
| 43 | U | R | U | U | U | U | U | U |
| 44 | R | R | U | R | R | R | R | R |
| 45 | R | R | U | R | R | R | R | R |
| 46 | U | U | U | U | U | U | U | U |
| 47 | O | O | O | O | O | O | O | O |
| 48 | U | U | U | E | E | U | U | U |
| 49 | R | U | O | O | U | U | R | R |
| 50 | R | O | U | R | R | R | R | R |

The table 4 set forth herein below further shows the equivalences obtained between the assigned classes on the basis of the different angular parameters (or combinations thereof) and the assigned classes by skilled assessors of the fifty carcasses by visual inspection.

**Table 4**

| **Parameters** | **Equivalence** | |
|---|---|---|
| | **Absolute numbers** | **%** |
| **AC** | 31 out of 50 | 62 |
| **AC1** | 26 out of 50 | 52 |
| **AC2** | 34 out of 50 | 68 |
| **AC3** | 31 out of 50 | 62 |
| **AC4** | 39 out of 50 | 78 |
| **AC+AC1+AC2+AC3+AC4** | 42 out of 50 | 84 |
| **AC+AC2+AC3+AC4** | 40 out of 50 | 80 |

It is possible to notice from the above-mentioned tables that the combined angular parameter AC+AC1+AC2+AC3+AC4 has an equivalence of 84%. In 16% of cases, instead, it showed a variation limited to only one class.

Without prejudice to the principle of the invention, the embodiments and the implementation details will be able to be widely varied with respect to what has been described and illustrated by way of non-limiting example only, without for this departing from the scope of the invention as defined in the appended claims.

For example, it is possible to advantageously provide that the processing unit 6 is configured and programmed to detect also automatically from the acquired digital image a measurement of the body condition of the bovine (BC score), for example, by carrying out an analysis of those areas of the side represented in the digital image that have a fat cover, by assessing the extent thereof with respect to the entire area of the carcass or with respect to those areas that have not a fat cover, and/or an indirect measure of the weight of the carcass, again by processing the digital image.
For the sake of completeness, also a translation of the anatomic parts cited in the claims is set forth herein below, in three languages: Latin, English, Italian, respectively. In fact, the Latin terms are widely used in the science of the anatomy of the animal body. The terms were taken from the boof "Anatomia comparata dei mammiferi domestici", Robert Barone, Vol. 1, available in several languages.

| **Latin** | **English** | **Italian** |
|---|---|---|
| **regio sacralis** | region of the rump | regione della groppa |
| **regio membri pelvium** | region of the lower limb | regione arto posteriore |
| **articulatio tibio-tarsi** | tibiotarsal articulation | articolazione tibio tarsica |
| **calcaneus** | calcaneus | calcaneo |
| **tendo calcaneus** | tendo calcaneus | corda del garretto |
| **femur** | thigh | coscia |
| **margo caudalis** | caudal profile | profilo caudale |
| **natis or (regio glutea)** | gluteus | gluteo |
| **latus** | flank | fianco |
| **regio paralumbalis latero-ventralis** | lower part of the flank | fuggente del fianco |
| **tuber ischii** | ischial tuberosity | tuberosità ischiatica |
| **margo ventralis** | ventral profile | profilo ventrale |

## Claims

1. An apparatus (1) for the SEUROP classification of the conformation of carcasses of slaughtered cattle, comprising:
- an acquisition unit (3) adapted to acquire at least one digital image (30) of an outer face of a side (45) of a carcass of a slaughtered bovine, the side (45) comprising a region of the rump and of the lower limb (46) and a remaining region (47) of the side (45);
- a processing unit (6) configured to receive the acquired digital image (30) and to calculate from the digital image (30) at least one angular parameter AC, AC1, AC2, AC3, AC4, the above-mentioned angular parameter being calculable with at least one landmark (P1-P4) located in the region of the rump and of the lower limb (46) shown in said digital image (30);
wherein the region of the rump and of the lower limb (46) shown in said digital image (30) comprises :
- a tibiotarsal articulation comprising a calcaneus and a tendo calcaneus (50);
- a thigh (51) having a caudal profile (52) with a first landmark (PI), at the boundary between the caudal profile (52) and the tendo calcaneus (50);
- a gluteus (53) ;
- a flank (54) ;
- a second landmark (P2) corresponding to the lower part of the flank (54) located between the thigh (51) and the flank (54);
- a third landmark (P3) corresponding to the ischial tuberosity;
- a ventral profile (55);
wherein the acquisition unit (3) is configured to acquire the digital image (30) in a condition in which the side (45) hangs at a fourth landmark (P4) of a free end portion of the calcaneus from an outer support member and wherein said at least one angular parameter is one of the following angular parameters AC, AC1, AC2, AC3, AC4, wherein:
- AC represents the angle defined in said digital image (30) between a vertical straight line (VI) and a straight line (Tl) tangent to the caudal profile (52) of the thigh (51) and passing through the first landmark (P1);
- AC1 represents the angle defined in said digital image (30) between a vertical straight line (V2) and a straight line (T2) passing through the second (P2) and the third (P3) landmarks;
- AC2 represents the angle defined in said digital image (30) between a straight line (T4) tangent to the caudal profile (52) of the thigh (51) passing through the fourth landmark (P4) and a straight line (T3) tangent to the ventral profile (55) passing through the fourth landmark (P4);
- AC3 represents the angle defined in said digital image (30) between a vertical straight line (V3) and said straight line (T4) tangent to the caudal profile (52) of the thigh (51) passing through the fourth landmark (P4);
- AC4 represents the angle defined in said digital image (30) between the straight line (T1) tangent to the caudal profile (52) of the thigh (51) and passing through the first landmark (P1) and a horizontal straight line (01) ;
wherein the processing unit (6) is configured to assign the carcass to one of the six classes of the SEUROP classification on the basis of the value of said at least one calculated angular parameter, by a comparison between said at least one angular parameter calculated and reference thresholds defined in the following table:
| **Angular parameters** | **Conformation classes** | | | | | |
|---|---|---|---|---|---|---|
| | **S** | **E** | **U** | **R** | **O** | **P** |
| | **Superior** | **Excellent** | **Very good** | **Good** | **Fair** | **Poor** |
| **AC** | >78-73 | 72-61 | 60-47 | 46-41 | 40-36 | ≤35 |
| **AC1** | >45-41 | 40-36 | 35-32 | 31 | 30-29 | ≤28 |
| **AC2** | >56-51 | 50-47 | 46-42 | 41 | 40-38 | ≤37 |
| **AC3** | >44-41 | 40-36 | 35-33 | 32 | 31-29 | ≤28 |
| **AC4** | >167-156 | 155-147 | 146-132 | 131-127 | 126-122 | ≤121 |

2. The apparatus (1) according to claim 1, wherein the processing unit (6) is configured to calculate two or more of the following angular parameters AC, AC1, AC2, AC3, AC4, and configured to obtain a combined parameter calculated as a linear combination of said calculated angular parameters, and wherein the attribution of one of the six classes of the SEUROP classification is carried out on the basis of the value of said combined parameter, by a comparison between the combined parameter and reference thresholds.

3. The apparatus (1) according to claim 2, wherein said combined parameter is the sum of the following parameters: AC, AC2, AC3, AC4.

4. The apparatus (1) according to claim 3, wherein said combined parameter is the sum of the following parameters: AC, AC1, AC2, AC3, AC4.

5. The apparatus (1) according to any one of the preceding claims, comprising a touchscreen display (4) to control the processing unit (6) and the acquisition unit (3), and further comprising a sealed container (2) adapted to house the processing unit (6) and the image acquisition unit (3).

6. The apparatus (1) according to any one of the preceding claims, wherein the processing unit (6) is configured to automatically detect said at least one landmark (P1, P2, P3, P4).

7. The apparatus (1) according to any one of the preceding claims, wherein the processing unit (6) is configured to allow a user to force said at least one landmark (P1, P2, P3, P4).

8. The apparatus (1) according to claims 5 and 7, wherein the processing unit (6) is configured to display the acquired digital image (30) on said touchscreen (4), and wherein the apparatus (1) is such that said forcing is carried out by the user through the touchscreen display.

9. The apparatus (1) according to any one of the preceding claims, further comprising an outer interchangeable lens (5) removably associable to said acquisition unit (3).

10. A method (100) for the SEUROP classification of the conformation of carcasses of slaughtered cattle by means of the apparatus (1) according to anyone of the preceding claims, comprising the steps of:
A) acquiring (101) at least one digital image (30) of an outer face of a side (45) of a carcass of a slaughtered bovine, the side (45) comprising a region of the rump and of the lower limb (46) and a remaining region (47) of the side (45) wherein the region of the rump and of the lower limb (46) shown in said digital image (30) comprises:
- a tibiotarsal articulation comprising a calcaneus and a tendo calcaneus (50);
- a thigh (51) having a caudal profile (52) with a first landmark (PI), at the boundary between the caudal profile (52) and the tendo calcaneus (50);
- a gluteus (53);
- a flank (54);
- a second landmark (P2) corresponding to the lower part of the flank (54) located between the thigh (51) and the flank (54);
- a third landmark (P3) corresponding to the ischial tuberosity;
- a ventral profile (55);
B) calculating (103), starting from the acquired digital image, at least one angular parameter AC, AC1, AC2, AC3, AC4 by using at least one landmark (P1-P4) found in the region of the rump and of the lower limb (46) shown in said digital image (30), wherein the digital image (30) is in a condition in which the side (45) hangs at a fourth landmark (P4) of a free end portion of the calcaneus from an outer support member and wherein said at least one angular parameter is one of the following angular parameters AC, AC1, AC2, AC3, AC4 , wherein:
- AC represents the angle defined in said digital image (30) between a vertical straight line (VI) and a straight line (Tl) tangent to the caudal profile (52) of the thigh (51) and passing through the first landmark (P1);
- AC1 represents the angle defined in said digital image (30) between a vertical straight line (V2) and a straight line (T2) passing through the second (P2) and the third (P3) landmarks;
- AC2 represents the angle defined in said digital image (30) between a straight line (T4) tangent to the caudal profile (52) of the thigh (51) passing through the fourth landmark (P4) and a straight line (T3) tangent to the ventral profile (55) passing through the fourth landmark (P4);
- AC3 represents the angle defined in said digital image (30) between a vertical straight line (V3) and said straight line (T4) tangent to the caudal profile (52) of the thigh (51) passing through the fourth landmark (P4);
- AC4 represents the angle defined in said digital image (30) between the straight line (T1) tangent to the caudal profile (52) of the thigh (51) and passing through the first landmark (P1)and a horizontal straight line (01);
C) assigning (104) the carcass to one of the six classes of the SEUROP classification on the basis of the value of said at least one calculated angular parameter by a comparison between said calculated angular parameter and reference thresholds defined in the following table:
| **Angular parameters** | **Conformation classes** | | | | | |
|---|---|---|---|---|---|---|
| | **S** | **E** | **U** | **R** | **O** | **P** |
| | **Superior** | **Excellent** | **Very good** | **Good** | **Fair** | **Poor** |
| **AC** | >78-73 | 72-61 | 60-47 | 46-41 | 40-36 | ≤35 |
| **AC1** | >45-41 | 40-36 | 35-32 | 31 | 30-29 | ≤28 |
| **AC2** | >56-51 | 50-47 | 46-42 | 41 | 40-38 | ≤37 |
| **AC3** | >44-41 | 40-36 | 35-33 | 32 | 31-29 | ≤28 |
| **AC4** | >167-156 | 155-147 | 146-132 | 131-127 | 126-122 | ≤121 |

## Patentansprüche

1. Vorrichtung (1) zur SEUROP-Klassifikation der Konformation von Kadavern von geschlachtetem Vieh, umfassend:
- eine Erfassungseinheit (3), die geeignet ist, mindestens ein digitales Bild (30) einer Außenfläche einer Seite (45) eines Kadavers eines geschlachteten Rindes aufzunehmen, wobei die Seite (45) einen Bereich des Rumpfes und der unteren Extremität (46) und einen verbleibenden Bereich (47) der Seite (45) umfasst;
- eine Verarbeitungseinheit (6), die ausgebildet ist, das erfasste digitale Bild (30) zu empfangen und aus dem digitalen Bild (30) mindestens einen Winkelparameter AC, AC1, AC2, AC3, AC4 zu berechnen, wobei der oben genannte Winkelparameter mit mindestens einer Landmarke (P1-P4) berechenbar ist, die sich im Bereich des Rumpfes und der unteren Extremität (46) befindet, welcher in dem besagten digitalen Bild (30) dargestellt ist;
wobei der Bereich des Rumpfes und der unteren Extremität (46), welcher in dem besagten digitalen Bild (30) dargestellt ist, folgendes umfasst:
- eine tibiotarsale Artikulation, die einen Calcaneus und einen Tendo Calcaneus (50) umfasst;
- einen Oberschenkel (51), der ein kaudales Profil (52) mit einer ersten Landmarke (P1) an der Grenze zwischen dem kaudalen Profil (52) und dem Tendo Calcaneus (50) aufweist;
- einen Gluteus (53);
- eine Flanke (54);
- eine zweite Landmarke (P2), die dem unteren Teil der Flanke (54) entspricht, welche sich zwischen dem Oberschenkel (51) und der Flanke (54) befindet;
- eine dritte Landmarke (P3), die der ischialen Tuberosität entspricht;
- ein ventrales Profil (55);
wobei die Erfassungseinheit (3) ausgebildet ist, das digitale Bild (30) in einem Zustand zu erfassen, in dem die Seite (45) an einer vierten Landmarke (P4) eines freien Endabschnitts des Calcaneus von einem äußeren Trägerelement hängt, und wobei der besagte mindestens eine Winkelparameter einer der folgenden Winkelparameter AC, AC1, AC2, AC3, AC4 ist, wobei:
- AC den in dem besagten digitalen Bild (30) definierten Winkel zwischen einer vertikalen Geraden (VI) und einer Geraden (T1) darstellt, die das kaudale Profil (52) des Oberschenkels (51) tangiert und durch die erste Landmarke (P1) verläuft;
- AC1 den in dem besagten digitalen Bild (30) definierten Winkel zwischen einer vertikalen Geraden (V2) und einer Geraden (T2) darstellt, die durch die zweite (P2) und die dritte (P3) Landmarke verläuft;
- AC2 den in dem besagten digitalen Bild (30) definierten Winkel zwischen einer Geraden (T4), die das kaudale Profil (52) des Oberschenkels (51) tangiert und durch die vierte Landmarke (P4) verläuft, und einer Geraden (T3) darstellt, die das ventrale Profil (55) tangiert und durch die vierte Landmarke (P4) verläuft;
- AC3 den in dem besagten digitalen Bild (30) definierten Winkel zwischen einer vertikalen Geraden (V3) und der besagten Geraden (T4) darstellt, die das kaudale Profil (52) des Oberschenkels (51) tangiert und durch die vierte Landmarke (P4) verläuft;
- AC4 den in dem besagten digitalen Bild (30) definierten Winkel zwischen der Geraden (T1), die das kaudale Profil (52) des Oberschenkels (51) tangiert und durch die erste Landmarke (P1) verläuft, und einer horizontalen Geraden (O1) darstellt;
wobei die Verarbeitungseinheit (6) ausgebildet ist, den Kadaver einer der sechs Klassen der SEUROP-Klassifikation auf der Grundlage des Wertes des besagten mindestens einen berechneten Winkelparameters durch einen Vergleich zwischen dem besagten mindestens einen berechneten Winkelparameter und den in der folgenden Tabelle definierten Referenzgrenzwerten zuzuordnen:
| **Angular parameters** | **Conformation classes** | | | | | |
|---|---|---|---|---|---|---|
| | **S** | **E** | **U** | **R O** | | **P** |
| | **Superior** | **Excellent** | **Very good** | **Good** | **Fair** | **Poor** |
| **AC** | >78-73 | 72-61 | 60-47 | 46-41 | 40-36 | ≤35 |
| **AC1** | >45-41 | 40-36 | 35-32 | 31 | 30-29 | ≤28 |
| **AC2** | >56-51 | 50-47 | 46-42 | 41 | 40-38 | ≤37 |
| **AC3** | >44-41 | 40-36 | 35-33 | 32 | 31-29 | ≤28 |
| **AC4** | >167-156 | 155-147 | 146-132 | 131-127 | 126-122 | ≤121 |

2. Vorrichtung (1) nach Anspruch 1, wobei die Verarbeitungseinheit (6) ausgebildet ist, zwei oder mehr der folgenden Winkelparameter AC, AC1, AC2, AC3, AC4 zu berechnen, und ausgebildet ist, einen kombinierten Parameter zu erhalten, der als lineare Kombination der besagten berechneten Winkelparameter berechnet wird, und wobei die Zuordnung einer der sechs Klassen der SEUROP-Klassifikation auf der Grundlage des Wertes des besagten kombinierten Parameters durch einen Vergleich zwischen dem kombinierten Parameter und Referenzgrenzwerten ausgeführt wird.

3. Vorrichtung (1) nach Anspruch 2, wobei der kombinierte Parameter die Summe der folgenden Parameter ist: AC, AC2, AC3, AC4.

4. Vorrichtung (1) nach Anspruch 3, wobei der kombinierte Parameter die Summe der folgenden Parameter ist: AC, AC1, AC2, AC3, AC4.

5. Vorrichtung (1) nach einem der vorhergehenden Ansprüche, umfassend ein Touchscreen-Display (4) zum Steuern der Verarbeitungseinheit (6) und der Erfassungseinheit (3) und ferner umfassend einen versiegelten Behälter (2), der geeignet ist, die Verarbeitungseinheit (6) und die Bilderfassungseinheit (3) aufzunehmen.

6. Vorrichtung (1) nach einem der vorhergehenden Ansprüche, wobei die Verarbeitungseinheit (6) ausgebildet ist, die besagte mindestens eine Landmarke (P1, P2, P3, P4) automatisch zu erfassen.

7. Vorrichtung (1) nach einem der vorhergehenden Ansprüche, wobei die Verarbeitungseinheit (6) ausgebildet ist, es einem Benutzer zu ermöglichen, die besagte mindestens eine Landmarke (P1, P2, P3, P3, P4) zu erzwingen.

8. Vorrichtung (1) nach den Ansprüchen 5 und 7, wobei die Verarbeitungseinheit (6) ausgebildet ist, das erfasste digitale Bild (30) auf dem besagten Touchscreen (4) anzuzeigen, und wobei die Vorrichtung (1) derart ausgebildet ist, dass das besagte Erzwingen von dem Benutzer über das Touchscreen-Display ausgeführt wird.

9. Vorrichtung (1) nach einem der vorhergehenden Ansprüche, ferner umfassend eine äußere austauschbare Linse (5), die der besagten Erfassungseinheit (3) abnehmbar zuordenbar ist.

10. Verfahren (100) zur SEUROP-Klassifikation der Konformation von Kadavern von geschlachtetem Vieh mittels der Vorrichtung (1) nach einem der vorhergehenden Ansprüche, wobei das Verfahren die folgenden Schritte umfasst:
A) Erfassen (101) mindestens eines digitalen Bildes (30) einer Außenfläche einer Seite (45) eines Kadavers eines geschlachteten Rindes, wobei die Seite (45) einen Bereich des Rumpfes und der unteren Extremität (46) und einen verbleibenden Bereich (47) der Seite (45) umfasst, wobei der Bereich des Rumpfes und der unteren Extremität (46), welcher in dem besagten digitalen Bild (30) dargestellt ist, folgendes umfasst:
- eine tibiotarsale Artikulation, die einen Calcaneus und einen Tendo Calcaneus (50) umfasst;
- einen Oberschenkel (51), der ein kaudales Profil (52) mit einer ersten Landmarke (P1) an der Grenze zwischen dem kaudalen Profil (52) und dem Tendo Calcaneus (50) aufweist;
- einen Gluteus (53);
- eine Flanke (54);
- eine zweite Landmarke (P2), die dem unteren Teil der Flanke (54) entspricht, welche sich zwischen dem Oberschenkel (51) und der Flanke (54) befindet;
- eine dritte Landmarke (P3), die der ischialen Tuberosität entspricht;
- ein ventrales Profil (55);
B) Berechnen (103), ausgehend von dem erfassten digitalen Bild, mindestens eines Winkelparameters AC, AC1, AC2, AC3, AC4 unter Verwendung mindestens einer Landmarke (P1-P4), die sich im Bereich des Rumpfes und der unteren Extremität (46) befindet, welcher in dem besagten digitalen Bild (30) dargestellt ist, wobei das digitale Bild (30) in einem Zustand ist, in welchem die Seite (45) an einer vierten Landmarke (P4) eines freien Endabschnitts des Calcaneus von einem äußeren Trägerelement hängt und wobei der besagte mindestens eine Winkelparameter einer der folgenden Winkelparameter AC, AC1, AC2, AC3, AC4 ist, wobei:
- AC den in dem besagten digitalen Bild (30) definierten Winkel zwischen einer vertikalen Geraden (VI) und einer Geraden (T1) darstellt, die das kaudale Profil (52) des Oberschenkels (51) tangiert und durch die erste Landmarke (P1) verläuft;
- AC1 den in dem besagten digitalen Bild (30) definierten Winkel zwischen einer vertikalen Geraden (V2) und einer Geraden (T2) darstellt, die durch die zweite (P2) und die dritte (P3) Landmarke verläuft;
- AC2 den in dem besagten digitalen Bild (30) definierten Winkel zwischen einer Geraden (T4), die das kaudale Profil (52) des Oberschenkels (51) tangiert und durch die vierte Landmarke (P4) verläuft, und einer Geraden (T3) darstellt, die das ventrale Profil (55) tangiert und durch die vierte Landmarke (P4) verläuft;
- AC3 den in dem besagten digitalen Bild (30) definierten Winkel zwischen einer vertikalen Geraden (V3) und der besagten Geraden (T4) darstellt, die das kaudale Profil (52) des Oberschenkels (51) tangiert und durch die vierte Landmarke (P4) verläuft;
- AC4 den in dem besagten digitalen Bild (30) definierten Winkel zwischen der Geraden (T1), die das kaudale Profil (52) des Oberschenkels (51) tangiert und durch die erste Landmarke (P1) verläuft, und einer horizontalen Geraden (O1) darstellt;
C) Zuordnen (104) des Kadavers zu einer der sechs Klassen der SEUROP-Klassifikation auf der Grundlage des Wertes des besagten mindestens einen berechneten Winkelparameters durch einen Vergleich zwischen dem besagten berechneten Winkelparameter und den in der folgenden Tabelle definierten Referenzgrenzwerten:
| **Angular parameters** | **Conformation classes** | | | | | |
|---|---|---|---|---|---|---|
| | **S** | **E** | **U** | **R** | **O** | **P** |
| | **Superior** | **Excellent** | **Very good** | **Good** | **Fair** | **Poor** |
| **AC** | >78-73 | 72-61 | 60-47 | 46-41 | 40-36 | ≤35 |
| **AC1** | >45-41 | 40-36 | 35-32 | 31 | 30-29 | ≤28 |
| **AC2** | >56-51 | 50-47 | 46-42 | 41 | 40-38 | ≤37 |
| **AC3** | >44-41 | 40-36 | 35-33 | 32 | 31-29 | ≤28 |
| **AC4** | >167-156 | 155-147 | 146-132 | 131-127 | 126-122 | ≤121 |

## Revendications

1. Appareil (1) pour la classification SEUROP de la conformation de carcasses de bétail abattu, comprenant :
- une unité d'acquisition (3) adaptée pour acquérir au moins une image numérique (30) d'une face externe d'un côté (45) d'une carcasse d'un bovin abattu, le côté (45) comprenant une région de la croupe et du membre inférieur (46) et une région restante (47) du côté (45) ;
- une unité de traitement (6) configurée pour recevoir l'image numérique (30) acquise et pour calculer à partir de l'image numérique (30) au moins un paramètre angulaire AC, AC1, AC2, AC3, AC4, le paramètre angulaire précité pouvant être calculé avec au moins un repère (P1 à P4) situé dans la région de la croupe et du membre inférieur (46) présentée sur ladite image numérique (30) ;
dans lequel la région de la croupe et du membre inférieur (46) présentée sur ladite image numérique (30) comprend :
- une articulation tibio-tarsienne comprenant un calcanéum et un tendon calcanéen (50) ;
- une cuisse (51) ayant un profil caudal (52) avec un premier repère (P1), au niveau de la frontière entre le profil caudal (52) et le tendon calcanéen (50) ;
- un muscle fessier (53) ;
- un flanc (54) ;
- un deuxième repère (P2) correspondant à la partie inférieure du flanc (54) situé entre la cuisse (51) et le flanc (54) ;
- un troisième repère (P3) correspondant à la tubérosité ischiatique ;
- un profil ventral (55) ;
dans lequel l'unité d'acquisition (3) est configurée pour acquérir l'image numérique (30) dans une condition dans laquelle le côté (45) est suspendu au niveau d'un quatrième repère (P4) d'une portion d'extrémité libre du calcanéum à partir d'un organe de support externe et dans lequel ledit au moins un paramètre angulaire est l'un des paramètres angulaires AC, AC1, AC2, AC3, AC4 suivants, dans lequel :
- AC représente l'angle défini sur ladite image numérique (30) entre une ligne droite verticale (VI) et une ligne droite (T1) tangente au profil caudal (52) de la cuisse (51) et passant par le premier repère (P1) ;
- AC1 représente l'angle défini sur ladite image numérique (30) entre une ligne droite verticale (V2) et une ligne droite (T2) passant par les deuxième (P2) et troisième (P3) repères ;
- AC2 représente l'angle défini sur ladite image numérique (30) entre une ligne droite (T4) tangente au profil caudal (52) de la cuisse (51) passant par le quatrième repère (P4) et une ligne droite (T3) tangente au profil ventral (55) passant par le quatrième repère (P4) ;
- AC3 représente l'angle défini sur ladite image numérique (30) entre une ligne droite verticale (V3) et ladite ligne droite (T4) tangente au profil caudal (52) de la cuisse (51) passant par le quatrième repère (P4) ;
- AC4 représente l'angle défini sur ladite image numérique (30) entre la ligne droite (T1) tangente au profil caudal (52) de la cuisse (51) et passant par le premier repère (P1) et une ligne droite horizontale (01) ;
dans lequel l'unité de traitement (6) est configurée pour attribuer la carcasse à l'une des six classes de la classification SEUROP sur la base de la valeur dudit au moins un paramètre angulaire calculé, par comparaison entre ledit au moins un paramètre angulaire calculé et des seuils de référence définis dans le tableau suivant :
| Paramètres angulaires | Classes de conformation | | | | | |
|---|---|---|---|---|---|---|
| | S | E | U | R | O | P |
| | Supérieur | Excellent | Très bon | Bon | Assez bon | Médiocre |
| AC | > 78-73 | 72-61 | 60-47 | 46-41 | 40-36 | ≤ 35 |
| AC1 | > 45-41 | 40-36 | 35-32 | 31 | 30-29 | ≤ 28 |
| AC2 | > 56-51 | 50-47 | 46-42 | 41 | 40-38 | ≤ 37 |
| AC3 | > 44-41 | 40-36 | 35-33 | 32 | 31-29 | ≤ 28 |
| AC4 | > 167-156 | 155-147 | 146-132 | 131-127 | 126-122 | ≤ 121 |

2. Appareil (1) selon la revendication 1, dans lequel l'unité de traitement (6) est configurée pour calculer deux ou plus des paramètres angulaires AC, AC1, AC2, AC3, AC4 suivants, et configurée pour obtenir un paramètre combiné calculé comme une combinaison linéaire desdits paramètres angulaires calculés, et dans lequel l'attribution de l'une des six classes de la classification SEUROP est réalisée sur la base de la valeur dudit paramètre combiné, par une comparaison entre le paramètre combiné et des seuils de référence.

3. Appareil (1) selon la revendication 2, dans lequel ledit paramètre combiné est la somme des paramètres suivants : AC, AC2, AC3, AC4.

4. Appareil (1) selon la revendication 3, dans lequel ledit paramètre combiné est la somme des paramètres suivants : AC, AC1, AC2, AC3, AC4.

5. Appareil (1) selon l'une quelconque des revendications précédentes, comprenant un écran tactile (4) pour commander l'unité de traitement (6) et l'unité d'acquisition (3), et comprenant en outre un contenant scellé (2) adapté pour loger l'unité de traitement (6) et l'unité d'acquisition d'image (3).

6. Appareil (1) selon l'une quelconque des revendications précédentes, dans lequel l'unité de traitement (6) est configurée pour détecter automatiquement ledit au moins un repère (P1, P2, P3, P4).

7. Appareil (1) selon l'une quelconque des revendications précédentes, dans lequel l'unité de traitement (6) est configurée pour permettre à un utilisateur de forcer ledit au moins un repère (P1, P2, P3, P4).

8. Appareil (1) selon les revendications 5 et 7, dans lequel l'unité de traitement (6) est configurée pour afficher l'image numérique (30) acquise sur ledit écran tactile (4), et dans lequel l'appareil (1) est tel que ledit forçage est réalisé par l'utilisateur par le biais de l'affichage sur l'écran tactile.

9. Appareil (1) selon l'une quelconque des revendications précédentes, comprenant en outre une lentille interchangeable externe (5) pouvant être associée de manière amovible à ladite unité d'acquisition (3).

10. Procédé (100) pour la classification SEUROP de la conformation de carcasses de bétail abattu au moyen de l'appareil (1) selon l'une quelconque des revendications précédentes, comprenant les étapes consistant à :
A) acquérir (101) au moins une image numérique (30) d'une face externe d'un côté (45) d'une carcasse d'un bovin abattu, le côté (45) comprenant une région de la croupe et du membre inférieur (46) et une région restante (47) du côté (45), dans lequel la région de la croupe et du membre inférieur (46) présentée sur ladite image numérique (30) comprend :
- une articulation tibio-tarsienne comprenant un calcanéum et un tendon calcanéen (50) ;
- une cuisse (51) ayant un profil caudal (52) avec un premier repère (P1), au niveau de la frontière entre le profil caudal (52) et le tendon calcanéen (50) ;
- un muscle fessier (53) ;
- un flanc (54) ;
- un deuxième repère (P2) correspondant à la partie inférieure du flanc (54) situé entre la cuisse (51) et le flanc (54) ;
- un troisième repère (P3) correspondant à la tubérosité ischiatique ;
- un profil ventral (55) ;
B) calculer (103), à partir de l'image numérique acquise, au moins un paramètre angulaire AC, AC1, AC2, AC3, AC4 à l'aide d'au moins un repère (P1 à P4) présent dans la région de la croupe et du membre inférieur (46) présentée sur ladite image numérique (30), dans lequel l'image numérique (30) se trouve dans une condition dans laquelle le côté (45) est suspendu au niveau d'un quatrième repère (P4) d'une portion d'extrémité libre du calcanéum depuis un organe de support externe et dans lequel ledit au moins un paramètre angulaire est l'un des paramètres angulaires AC, AC1, AC2, AC3, AC4 suivants, dans lequel :
- AC représente l'angle défini sur ladite image numérique (30) entre une ligne droite verticale (VI) et une ligne droite (T1) tangente au profil caudal (52) de la cuisse (51) et passant par le premier repère (P1) ;
- AC1 représente l'angle défini sur ladite image numérique (30) entre une ligne droite verticale (V2) et une ligne droite (T2) passant par les deuxième (P2) et troisième (P3) repères ;
- AC2 représente l'angle défini sur ladite image numérique (30) entre une ligne droite (T4) tangente au profil caudal (52) de la cuisse (51) passant par le quatrième repère (P4) et une ligne droite (T3) tangente au profil ventral (55) passant par le quatrième repère (P4) ;
- AC3 représente l'angle défini sur ladite image numérique (30) entre une ligne droite verticale (V3) et ladite ligne droite (T4) tangente au profil caudal (52) de la cuisse (51) passant par le quatrième repère (P4) ;
- AC4 représente l'angle défini sur ladite image numérique (30) entre la ligne droite (T1) tangente au profil caudal (52) de la cuisse (51) et passant par le premier repère (P1) et une ligne droite horizontale (01);
C) attribuer (104) à la carcasse l'une des six classes de la classification SEUROP sur la base de la valeur dudit au moins un paramètre angulaire calculé par comparaison entre ledit paramètre angulaire calculé et des seuils de référence définis dans le tableau suivant :
| Paramètres angulaires | Classes de conformation | | | | | |
|---|---|---|---|---|---|---|
| | S | E | U | R | O | P |
| | Supérieur | Excellent | Très bon | Bon | Assez bon | Médiocre |
| AC | > 78-73 | 72-61 | 60-47 | 46-41 | 40-36 | ≤ 35 |
| AC1 | > 45-41 | 40-36 | 35-32 | 31 | 30-29 | ≤ 28 |
| AC2 | > 56-51 | 50-47 | 46-42 | 41 | 40-38 | ≤ 37 |
| AC3 | > 44-41 | 40-36 | 35-33 | 32 | 31-29 | ≤ 28 |
| AC4 | > 167-156 | 155-147 | 146-132 | 131-127 | 126-122 | ≤ 121 |
